# EUROPÄISCHE PATENTSCHRIFT

(11) **EP 1 792 760 B1**
(45) Veröffentlichungstag und Bekanntmachung des Hinweises auf die Patenterteilung: **19.05.2010**
(21) Anmeldenummer: 05292571.6
(22) Anmeldetag: 02.12.2005
(51) Int. Cl.: B60H 1/00

(54) **Klimaanlage, insbesondere für ein Kraftfahrzeug**
Air conditioner, in particular for a vehicle
Climatisation, en particulier pour un véhicule

(43) Veröffentlichungstag der Anmeldung: 06.06.2007
(73) Patentinhaber: Behr France Rouffach SAS, 68250 Rouffach (FR)
(72) Erfinder: Klein, Henri, 68000 Colmar (FR)
(74) Vertreter: Nestler, Jan Hendrik

(56) Entgegenhaltungen:
- US-A1- 2004 185 768
- US-A1- 2005 126 774
- US-B2- 6 482 081

## Beschreibung

Die Erfindung betrifft eine Klimaanlage, insbesondere für ein Kraftfahrzeug, gemäß dem Oberbegriff des Anspruches 1.

Eine derartige Klimaanlage ist aus US 2004/0185768, das als nächstliegender Stand der Technik angesehen wird, offenbart.

Bei Klimaanlagen ist häufig im Luftführungsgehäuse vor dem Mischraum eine Trommelklappe als Mischklappe angeordnet, welche die Öffnungen des Warm- und Kaltluftkanals je nach Stellung ganz oder teilweise freigibt oder verschließt. Eine derartige Klimaanlage ist beispielsweise in der EP 1 013 491 A1 offenbart. Die Trommelklappen weisen hierbei üblicherweise einen absperrenden, verschwenkbaren Teil in Form eines Teils eines hohlzylindrischen oder annähernd hohlzylindrischen Bereichs und zwei seitlich hiervon angeordnete, in radialer Richtung verlaufende Kreissegmente auf, wobei die Trommelklappe um eine Achse verschwenkbar ist, die koaxial zum hohlzylindrischen Bereich verläuft. Die Schwenkachse liegt im Mischraum. Gemäß der EP 1 013 491 A1 ist für die Regelung der Luftverteilung nach dem Verdampfer und vor dem Heizer eine Klappe mit mittig verlaufender Schwenkachse vorgesehen, welche den Luftstrom durch den Heizer bei Bedarf ganz oder teilweise absperren kann. Gemäß einer Variante sind zwei entsprechend gelagerte Klappen vor dem Heizer vorgesehen, wobei jede jeweils etwa die Hälfte der Eintrittsfläche zum Heizer absperren kann. Eine derartige Klimaanlage lässt in Hinblick auf den erforderlichen Bauraum noch Wünsche offen.

Eine andere, mehrzonige Klimaanlage mit einer Mehrzahl herkömmlicher Klappen ist aus der US 5,862,677 A bekannt. Hierbei ist ein Heizer, der etwas schmaler baut als ein Verdampfer, leicht seitlich versetzt in Strömungsrichtung hinter dem Verdampfer angeordnet, wobei beidseitig Bypässe vorgesehen sind, die von zwei Klappen geregelt werden, welche auch den Luftdurchtritt durch den Heizer regeln. Vom Mischraum aus sind durch Klappen geregelte Strömungswege für die Frontbelüftung, den Frontfußraum und den Defrostbetrieb vorgesehen. Hinter dem Heizer sind zwei Klappen vorgesehen, welche den Luftdurchtritt zum Mischraum, wo die kalte und warme Luft gemischt werden, und zum Fondbereichkanal, welcher die Luft nach hinten führt, regeln. Auch eine derartige Klimaanlage lässt noch Wünsche offen

Der Erfindung liegt die Aufgabe zugrunde, eine Klimaanlage der eingangs genannten Art zu verbessern, insbesondere in Hinblick auf den Bauraum.

Diese Aufgabe wird erfindungsgemäß durch eine Klimaanlage mit den Merkmalen des Anspruches 1 gelöst. Vorteilhafte Ausgestaltungen sind Gegenstand der Unteransprüche.

Erfindungsgemäß ist eine Klimaanlage, insbesondere eine Kraftfahrzeug-Klimaanlage, mit mindestens einem in einem Gehäuse angeordneten Verdampfer, mindestens einem Heizer und mindestens zwei Mischklappen, von denen mindestens eine dem Frontbereich und mindestens eine dem Fondbereich zugeordnet ist, wobei die mindestens eine Mischklappe für den Fondbereich eine Trommelklappe und die mindestens eine Mischklappe für den Frontbereich eine Schmetterlingsklappe ist. Bevorzugt sind jeweils zwei Klappen vorgesehen, also jeweils eine Fond- und eine Front-Mischklappe für die Fahrerseite und jeweils eine Fond- und eine Front-Mischklappe für die Beifahrerseite, wobei die Schwenkachsen der beiden Fond-Mischklappen bevorzugt miteinander fluchten, wie auch die Schwenkachsen der beiden Front-Mischklappen bevorzugt miteinander fluchten.

Die Trommelklappe weist hierbei bevorzugt einen hohlzylindrischen Bereich, vorzugsweise entsprechend einem Winkelbereich von 30° bis 90°, insbesondere von 40° bis 70° und insbesondere bevorzugt von 50° bis 60°, eines Hohlzylinders, und seitlich je ein entsprechendes Kreissegment auf. Der Schwenkwinkel der Trommelklappe entspricht vorzugsweise annähernd dem Winkelbereich, welchen der hohlzylindrische Bereich einnimmt.

Die Schmetterlingsklappe ist bevorzugt asymmetrisch, d.h. mit unterschiedlichen Flügellängen, ausgebildet, wobei die beiden Flügel bevorzugt in einem Winkel von 100° bis 180°, insbesondere von 130° bis 170° und insbesondere bevorzugt von 140° bis 160°, zueinander angeordnet sind. Der Schwenkwinkel der Schmetterlingsklappe beträgt vorzugsweise maximal 90°, insbesondere bevorzugt zwischen 40° und 70°.

Bevorzugt weist die Klimaanlage in ihrer Mittelebene eine Trennwand auf Ferner sind vorzugsweise das Gehäuse und die im Gehäuse angeordneten Klappen, wie insbesondere bevorzugt die Fond-Mischklappen, die Front-Mischklappen, die Defrostklappen, die Fond-Fußraumklappen, die Fond-Belüftungsklappen, die Front-Fußraumklappen und die Front-Belüftungsklappen, spiegelbildlich zur Mittelebene angeordnet und ausgebildet.

Der Heizer ist vorzugsweise in einem Winkel von maximal 20°, insbesondere bevorzugt in einem Winkel von maximal 10°, bezüglich des Verdampfers geneigt. Durch diese annähernd parallele Anordnung, die insbesondere durch die Wahl der Mischklappen ermöglicht wird, kann eine geringe Baulänge (X-Richtung) ermöglicht werden.

Die oberste Kante des Heizers ist vorzugsweise im eingebauten Zustand der Klimaanlage bei eben stehendem Kraftfahrzeug etwa, d.h. +/- 20%, insbesondere bevorzugt +/- 10%, der Verdampferbauhöhe, in gleicher Höhe wie die oberste Kante des Verdampfers angeordnet.

Bevorzugt ist die Schwenkachse der Fond-Mischklappe benachbart zu dem Verdampfer angeordnet. Dies ermöglicht eine kurze Baulänge.

Die Schwenkachse der Fond-Mischklappe ist vorzugsweise zwischen dem untersten Viertel und dem zweituntersten Viertel des Verdampfers angeordnet.

Bevorzugt ist die Schwenkachse der Front-Mischklappe benachbart einer Kante, besonders bevorzugt der obersten Kante, des Heizers angeordnet, wodurch sich eine raumsparende Ausgestaltung der Anordnung ermöglicht. Die Flügellänge eines Flügels entspricht bevorzugt etwa der halben Heizerhöhe, welches auch etwa dem Abstand der oberen benachbarten Kanten von Heizer und Verdampfer entspricht, so dass der vorhandene Bauraum optimal genutzt werden kann und keine unnötige Verlängerung der Klimaanlage in X-Richtung erforderlich ist. Eine leichte Neigung des Heizers weg vom Verdampfer ermöglicht eine Optimierung der Baulänge bei ausreichender Mischraumgröße.

Hinter dem Heizer oder hinter einem hinter dem Heizer angeordneten Zuheizer ist vorzugsweise im mittleren Bereich eine Klappe angeordnet, mittels welcher eine Öffnung zwischen dem Frontbereich und dem Fondbereich regelbar ist. Die Klappe wird bevorzugt ausschließlich im Defrostbetrieb geöffnet, so dass zum Entfrosten der Windschutzscheibe die volle Gebläseleistung zur Verfügung steht und nicht nur die normalerweise dem Frontbereich zur Verfügung stehende Luftmenge, also etwa die Hälfte der Gesamtluftmenge.

Eine erfindungsgemäß ausgebildete Klimaanlage ermöglicht eine Verringerung der Baulänge (X-Richtung), so dass mehr Bauraum für andere Baugruppen o.ä. vor oder hinter der Klimaanlage zur Verfügung steht. Ferner lässt sich die Klimaanlage einfach an unterschiedliche Zonenzahlen anpassen, indem zur Verringerung der Zonenzahl einzelne Klappen miteinander gekoppelt werden. Zwar haben dann auch ein- oder zweizonige Klimaanlagen das Gehäuse und die Klappen von drei- oder vierzonigen Klimaanlage, jedoch ist zum einen eine Kostenreduzierung in Folge einer stark erhöhten Stückzahlen gleicher Bauteile, wie Gehäuse, Klappen, Verdampfer, Heizer und ggf. Zuheizer, möglich, zum anderen ist keine neue Auslegung der Luftkanäle erforderlich, d.h. eine Vereinfachung der Konstruktion auf Grund verringerter Variantenzahl, und des weiteren ist eine Vereinfachung der Aufwertung der Klimaanlage, bspw. von einer zweizonigen zu einer vierzonigen Klimaanlage, wobei das Gehäuse und die hierin angeordneten Bauteile, wie Klappen, Verdampfer oder Heizer, nicht ausgetauscht werden müssen, sondern ausschließlich die in der Regel außenseitig angebrachte Kinematik, d.h. die Aktuatoren und Regelung der Klappensteuerung, an die neuen Erfordernisse angepasst werden muss.

Im Folgenden ist die Erfindung anhand von eines Ausführungsbeispiels näher erläutert. Es zeigen:
- Fig. 1: einen schematisch dargestellten Schnitt durch eine erfindungsgemäße, mehrzonige Kraftfahrzeug-Klimaanlage,
- Fig. 2: eine schematische Darstellung des Strömungsverlaufs in der Betriebsstellung "Belüftung kalt",
- Fig. 3: eine schematische Darstellung des Strömungsverlaufs in der Betriebsstellung "Fußraum 100% warm",
- Fig. 4: eine schematische Darstellung des Strömungsverlaufs in der Betriebsstellung "Entfrostung 100% warm".
- Fig. 5: eine schematische Darstellung des Strömungsverlaufs in der Betriebsstellung "50% warm", und
- Fig. 6: eine schematische Darstellung der Kinematik für eine ein- oder zweizonige Klimaanlage auf Basis der Klimaanlage von Fig. 1, und
- Fig. 7: eine Variante mit verringerter Klappenanzahl für den Frontbereich.

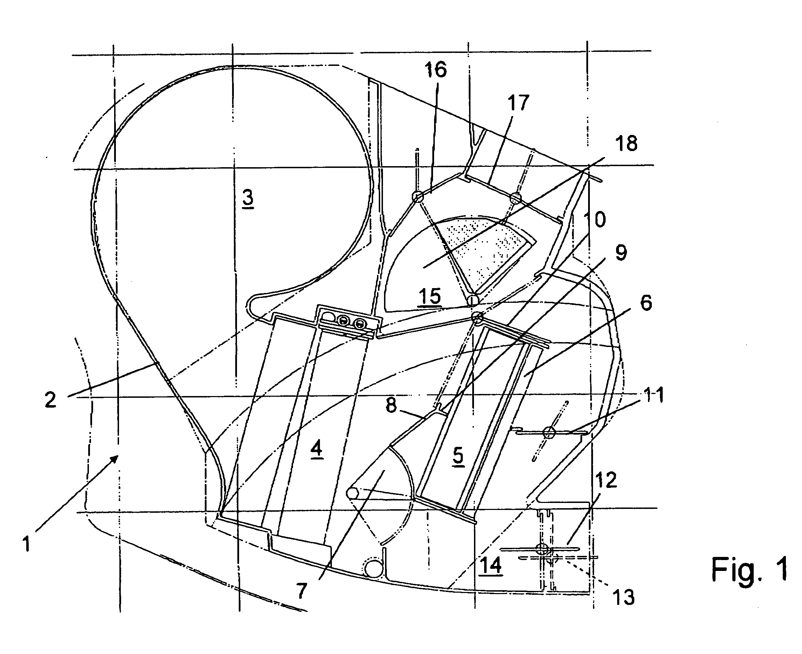

Eine mehrzonige, vorliegend vierzonige Kraftfahrzeug-Klimaanlage 1 weist ein in einem mehrteiligen Gehäuse 2 angeordnetes Gebläse 3, einen Verdampfer 4 und einen Heizkörper 5 mit elektrischem PTC-Zuheizer 6 auf. Hierbei ist die Klimaanlage 1 im Wesentlichen spiegelbildlich zur Schnittebene der Fig. 1 ausgebildet, wobei zur Teilung der Luftströme entsprechende, in der Mittelebene verlaufende Trennwände im Gehäuse 2 zwischen der Fahrer- und Beifahrerseite im Front- und Fondbereich und für die Regelung der Luftströme entsprechende Klappen und Aktuatoren vorgesehen sind, so dass im Folgenden nur auf eine Seite näher eingegangen wird.

Der Heizer 5 samt dem direkt hinter und parallel zu demselben angeordneten Zuheizer 6 bauen etwas schmaler als der Verdampfer 4. Dabei sind der Heizer 5 und Zuheizer 6 etwas nach oben versetzt und vorliegend in einem Winkel von etwa 10° in Luftströmungsrichtung bezüglich der Parallelen zum Verdampfer 4 nach unten geneigt angeordnet, d.h. Verdampfer 4 und Heizer 5 samt Zuheizer 6 sind annähernd parallel zueinander angeordnet.

Im Bereich zwischen Verdampfer 4 und Heizer 5 ist eine Mischklappe 7 für den Fondbereich angeordnet, wobei die Schwenkachse der Fond-Mischklappe 7 benachbart zum Verdampfer 4 in einer Höhe zwischen dem untersten und zweituntersten Viertel desselben angeordnet ist. Die Fond-Mischklappe 7 ist als Trommelklappe ausgebildet, wobei eine zylindrische Fläche in einem Winkel von 55° vorgesehen ist. Der Schwenkwinkel der Fond-Mischklappe 7 beträgt annähernd 55°. In Fig. 1 sind die beiden Endstellungen dargestellt, wobei die Kaltstellung mit durchgezogener Linie und die Warmstellung mit einer Strich-Punkt-Punkt-Linie dargestellt ist.

Um eine günstige Luftaufteilung auf den Front- und Fondbereich zu ermöglichen, ist eine Führungswand 8 vor dem Heizer 5 ausgebildet, welche auf einer Seite an der Fond-Mischklappe 7 in deren Kaltstellung anliegt und auf der anderen Seite zum einen in eine Trennwand 9 übergeht, welche den Luftstrom zwischen dem Front- und Fondbereich im Heizer 5 trennt, und zum anderen eine Anlagefläche für eine Mischklappe 10 für den Frontbereich bildet, an welcher die Front-Mischklappe 10 mit dem entsprechenden Klappenende in der Kaltstellung anliegt. Fig. 1 zeigt beide Endstellungen der Front-Mischklappe 10, wobei die Kaltstellung durch eine Strich-Punkt-Punkt-Linie angedeutet ist.

Die Front-Mischklappe 10 ist als sogenannte Schmetterlingsklappe ausgebildet, wobei die beiden Klappenflügel in einem Winkel von vorliegend ca. 150° zueinander angeordnet und mit unterschiedlichen Längen ausgebildet sind. Die Schwenkachse der Front-Mischklappe 10 ist am obersten Eck des Heizers 5 angeordnet. Der Schwenkwinkel der Front-Mischklappe 10 beträgt ca. 55°.

Hinter dem Heizer 5 und Zuheizer 6 ist die Trennwand in Form einer Klappe 11 fortgeführt, welche ausschließlich im Defrostbetrieb geöffnet ist und die dem Frontbereich zur Verfügung stehende Luftmenge vergrößert, damit ein möglichst schnelles Entfernen eines Beschlags von der Windschutzscheibe möglich ist. Die Klappe 11 ist als herkömmliche Klappe mit einer mittig angeordneten Schwenkachse ausgebildet, so dass die auf die Klappe wirkenden Kräfte, insbesondere in Schließrichtung, möglichst gering gehalten werden können. Für die Klappe 11 sind vorliegend nur zwei Stellungen, nämlich "zu" (durchgezogene Linie) und "auf" (Strich-Punkt-Punkt-Linie), vorgesehen, die beide in der Zeichnung angedeutet sind.

Für den Fondbereich ist eine jeweils eine Fußraumklappe 12 und eine Belüftungsklappe 13 (gestrichelt dargestellt) nachfolgend einem Fond-Mischraum 14 angeordnet. Auch bei diesen Klappen 12 und 13 handelt es sich um herkömmliche Klappen mit einer mittig angeordneten Schwenkachse, um die auftretenden Kräfte gering zu halten.

Nachfolgend einem Front-Mischraum 15, welcher hinter der Front-Mischklappe 10 angeordnet ist, sind eine Defrostklappe 16, eine Belüftungsklappe 17 und eine Fußraumklappe 18 angeordnet, wobei die Klappe 16 als Schmetterlingsklappe und die Klappe 17 als herkömmliche Klappe mit mittig angeordneter Schwenkachse ausgebildet sind, und die Fußraumklappe 18 außenseitig angeordnet und als Kreissegment ausgebildet ist, das parallel zur Gehäusewand verschwenkbar ist. Die Durchtrittsöffnung zum Fußraumkanal, welche von der Klappe 18 verschließbar ist, ist in Fig. 1 schraffiert dargestellt.

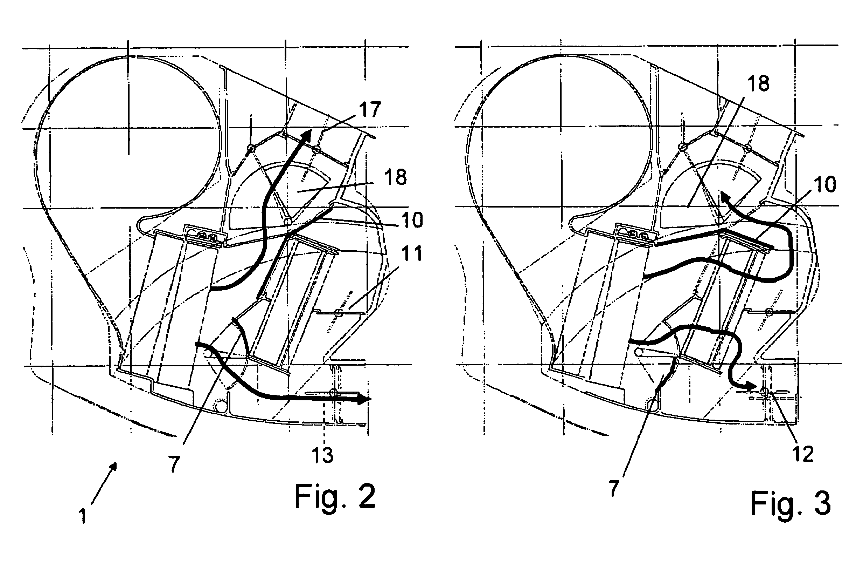

Die Funktion der Mischklappen 7 und 10 wird im Folgenden unter Bezugnahme auf die Figuren 2 bis 6 näher erläutert. Wie aus Fig. 2 ersichtlich, wird durch beide Mischklappen 7 und 10 in der Betriebsstellung "Belüftung 100% kalt" der Heizer 5 vollständig abgesperrt, so dass die gesamte vom Verdampfer 4 kommende, kalte Luft außenseitig am Heizer 5 und Zuheizer 6 vorbeigeleitet wird, also direkt in die Mischräume 15 und 14 gelangt und durch die entsprechenden, offenen Belüftungsklappen 17 und 13 strömen kann. Sämtliche anderen Klappen sind vorliegend geschlossen.

Fig. 3 zeigt die Betriebsstellung "Fußraum 100% warm". Hierbei wird die gesamte vom Verdampfer 4 kommende Luft durch den Heizer 5 und Zuheizer 6 geleitet und erwärmt. Die Mischklappen 7 und 10 sperren hierbei die beiden Bypässe um den Heizer/Zuheizer vollständig ab. Nach Durchströmen der Mischräume 15 bzw. 14 strömt die warme Luft durch die offenen Fußraumklappen 18 bzw. 12 in die entsprechenden Fußräume, wie durch Pfeile in Fig. 3 angedeutet.

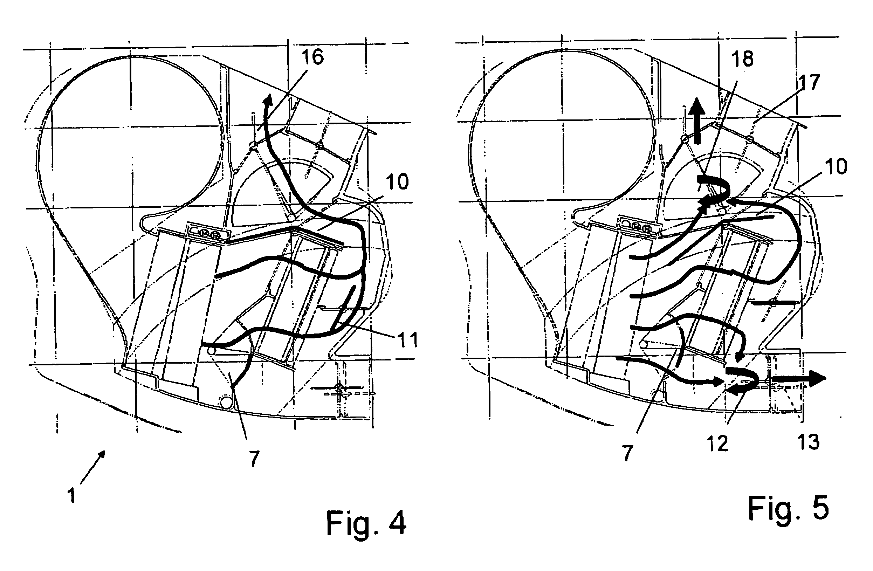

In Fig. 4 ist der Defrostbetrieb dargestellt, wobei die gesamte Luft wiederum durch den Heizer/Zuheizer geleitet wird. Hierbei ist die Klappe 11, die hinter dem Heizer/Zuheizer angeordnet ist, geöffnet, während die anderen, dem Fondbereich zugeordneten Klappen 12 und 13 geschlossen sind, so dass die gesamte Luft dem Frontbereich zur Verfügung steht. Hierbei ist ausschließlich die Defrostklappe 16 geöffnet, die Front-Klappen 17 und 18 sind geschlossen, so dass die gesamte vom Gebläse 3 kommende, durch den Heizer 5 und/oder Zuheizer 6, soweit im entsprechenden Betriebszustand des Fahrzeuges bereits ausreichend Wärme zur Verfügung steht, erwärmte Luft für eine Beseitigung eines Beschlags an der Windschutzscheibe zur Verfügung steht.

Fig. 5 zeigt eine übliche Betriebsstellung, gemäß der zu je 50% warme und kalte Luft gemischt werden. Die Luft wird dann durch die geöffneten Klappen 12, 13, 17 und 18 dem Fahrzeuginnenraum zugeführt.

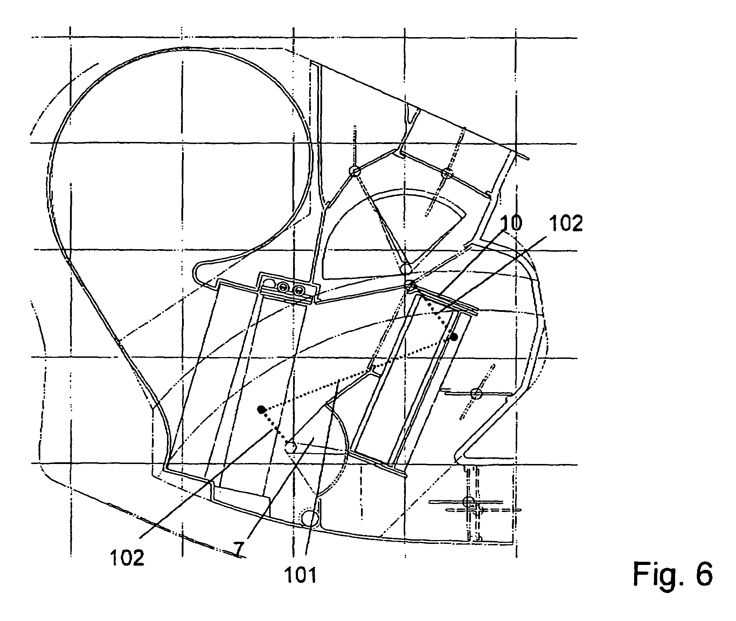

Fig. 6 zeigt eine Koppelung der beiden Mischklappen 7 und 10 für eine ein- oder zweizonige Variante der zuvor beschriebenen Klimaanlage, so dass auch für diese geringerzonig ausgebildete Klimaanlage der selbe Aufbau, d.h. insbesondere das selbe Gehäuse 2 und die selben Klappen, verwendet werden kann. Die Regelung durch einen Aktuator (nicht dargestellt) ist in Folge der Koppelung der Mischklappen 7 und 10 über eine Schubstange 101 und zwei Hebel 102, welche an den Enden der Schubstange 101 vorgesehen und mit den von der Schubstange 101 beabstandeten Enden mit der Mischklappe 7 bzw. 10 verbunden sind, jedoch vereinfacht.

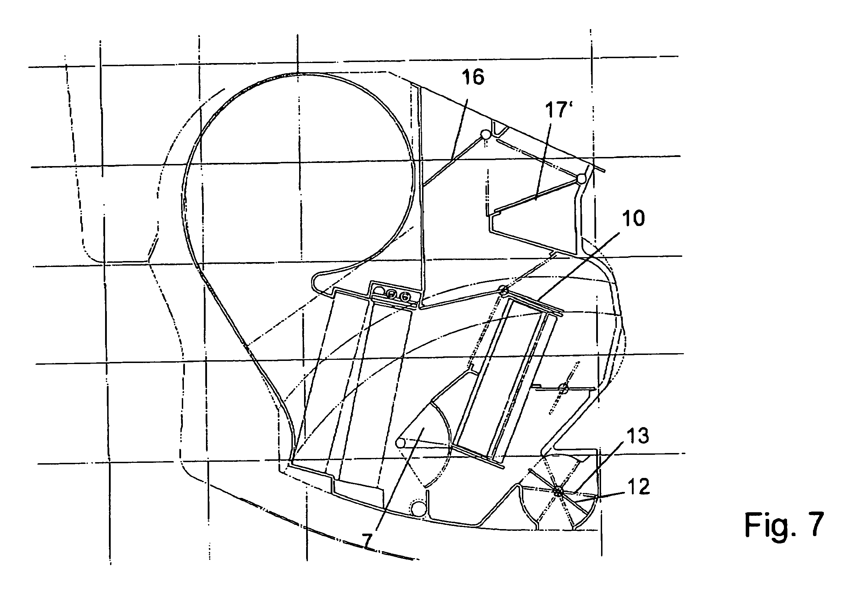

In Fig. 7 ist eine vereinfachte Variante der Klimaanlage dargestellt, gemäß der die Klappen für den Frontfußraum und die Frontbelüftung zusammengefasst sind, d.h. für den Frontbereich sind somit nur die Defrostklappe 16 und eine Belüftungs-/Fußraumklappe 17' vorgesehen. Beide Klappen 16 und 17' weisen vorliegend seitlich angeordnete Schwenkachsen auf, wobei die Schwenkachse der Defrostklappe 16 zwischen dem Defrostluftkanal und dem Belüftungsluftkanal und die Schwenkachse der Belüftungs-/Fußraumklappe 17' auf der anderen Seite des Belüftungskanals angeordnet ist (siehe Fig. 7). Der Luftkanalverlauf für den Frontbereich ist entsprechend gegenüber dem zuvor beschriebenen Ausführungsbeispiel abgeändert.

Die Fußraumklappe 12 und die Belüftungsklappe 13 des Fondbereichs sind ferner über eine Kinematik miteinander fest gekoppelt, so dass auch hier die Regelung stark vereinfacht ist und nur ein Aktuator erforderlich ist. Als Aktuator kann hierbei auch direkt der Bedienschalter dienen, an welchem bspw. ein Bowdenzug angebracht sein kann, welcher Bewegungen als Stellbewegungen mechanisch überträgt.

Eine entsprechende Koppelung der Klappen 12 und 13, d.h. der Fußraum- und Belüftungsklappe des Fondbereichs, ist auch im Falle des ersten Ausführungsbeispiels zur Vereinfachung und Verringerung der Zonenzahl möglich.

## Patentansprüche

1. Klimaanlage, insbesondere Kraftfahrzeug-Klimaanlage, mit mindestens einem in einem Gehäuse (2) angeordneten Verdampfer (4), mindestens einem Heizer (5) und mindestens zwei Mischklappen (7; 10), von denen mindestens eine dem Frontbereich und mindestens eine dem Fondbereich zugeordnet ist, **dadurch gekennzeichnet, dass** die mindestens eine Mischklappe (7) für den Fondbereich eine Trommelklappe und die mindestens eine Mischklappe (10) für den Frontbereich eine Schmetterlingsklappe mit Flügeln ist.

2. Klimaanlage nach Anspruch 1, **dadurch gekennzeichnet, dass** zwei Mischklappen (7) für den Fondbereich und zwei Mischklappen (10) für den Frontbereich vorgesehen sind.

3. Klimaanlage nach Anspruch 1 oder 2, **dadurch gekennzeichnet, dass** die Klimaanlage in ihrer Mittelebene eine Trennwand aufweist und das Gehäuse (2) und die im Gehäuse (2) angeordneten Klappen (7; 10; 12; 13; 16; 17; 18; 17') spiegelbildlich zur Mittelebene ausgebildet sind.

4. Klimaanlage nach einem der vorstehenden Ansprüche, **dadurch gekennzeichnet, dass** der Heizer (5) in einem Winkel von maximal 20°, insbesondere von maximal 10°, bezüglich des Verdampfers (4) geneigt ist.

5. Klimaanlage nach einem der vorstehenden Ansprüche, **dadurch gekennzeichnet, dass** die oberste Kante des Heizers (5) etwa in gleicher Höhe wie die oberste Kante des Verdampfers (4) angeordnet ist.

6. Klimaanlage nach einem der vorstehenden Ansprüche, **dadurch gekennzeichnet, dass** die Schwenkachse der Fond-Mischklappe (7) benachbart zu dem Verdampfer (4) angeordnet ist.

7. Klimaanlage nach einem der vorstehenden Ansprüche, **dadurch gekennzeichnet, dass** die Schwenkachse der Fond-Mischklappe (7) zwischen dem untersten Viertel und dem zweituntersten Viertel des Verdampfers (4) angeordnet ist.

8. Klimaanlage nach einem der vorstehenden Ansprüche, **dadurch gekennzeichnet, dass** die Schwenkachse der Front-Mischklappe (10) benachbart einer Kante des Heizers (5) angeordnet ist.

9. Klimaanlage nach Anspruch 8, **dadurch gekennzeichnet, dass** die Schwenkachse der Front-Mischklappe (10) benachbart der obersten Kante des Heizers (5) angeordnet ist.

10. Klimaanlage nach einem der vorstehenden Anspruche, **dadurch gekennzeichnet, dass** hinter dem Heizer (5) oder einem hinter dem Heizer (5) angeordneten Zuheizer (6) im mittleren Bereich eine Klappe (11) angeordnet ist, mittels welcher eine Öffnung zwischen dem Frontbereich und dem Fondbereich regelbar ist.

## Claims

1. An air conditioner, in particular a motor vehicle air conditioner, comprising at least one evaporator (4) arranged in a housing (2), at least one heater (5), and at least two mixer vents (7; 10), of which at least one is associated with the front region and at least one is associated with the rear region, **characterized in that** the at least one mixer vent (7) for the rear region is a drum vent and the at least one mixer vent (10) for the front region is a butterfly vent having wings.

2. The air conditioner according to claim 1, **characterized in that** two mixer vents (7) are provided for the rear region and two mixer vents (10) for the front region.

3. The air conditioner according to claim 1 or 2, **characterized in that** the air conditioner has a separating wall in the center plane thereof, and the housing (2) and the vents (7; 10; 12; 13; 16; 17; 18; 17') arranged in the housing (2) are designed laterally inverted with respect to the center plane.

4. An air conditioner according to any one of the preceding claims, **characterized in that** the heater (5) is inclined relative to the evaporator (4) at an angle of no more than 20°, in particular no more than 10°.

5. An air conditioner according to any one of the preceding claims, **characterized in that** the top edge of the heater (5) is arranged approximately at the same height as the top edge of the evaporator (4).

6. An air conditioner according to any one of the preceding claims, **characterized in that** the pivot axis of the rear mixer vent (7) is arranged adjacent to the evaporator (4).

7. An air conditioner according to any one of the preceding claims, **characterized in that** the pivot axis of the rear mixer vent (7) is arranged between the lowest quarter and the second-lowest quarter of the evaporator (4).

8. An air conditioner according to any one of the preceding claims, **characterized in that** the pivot axis of the front mixer vent (10) is arranged adjacent to an edge of the heater (5).

9. The air conditioner according to claim 8, **characterized in that** the pivot axis of the front mixer vent (10) is arranged adjacent to the top edge of the heater (5).

10. An air conditioner according to any one of the preceding claims, **characterized in that** in the central region a vent (11) is arranged behind the heater (5), or behind an auxiliary heater (6) arranged behind the heater (5), the vent regulating an opening between the front region and the rear region.

## Revendications

1. Système de climatisation, en particulier système de climatisation pour véhicule automobile, comprenant au moins un évaporateur (4) disposé dans un carter (2), au moins un radiateur (5) et au moins deux volets mélangeurs (7 ; 10) dont au moins un est associé au secteur avant et au moins un au secteur arrière,
**caractérisé en ce que** le volet mélangeur (7) au moins au nombre de un, prévu pour le secteur arrière, est un volet à tambour, et le volet mélangeur (10) au moins au nombre de un, prévu pour le secteur avant, est un volet papillon à ailettes.

2. Système de climatisation selon la revendication 1,
**caractérisé en ce qu'**il est prévu deux volets mélangeurs (7) pour le secteur arrière et deux volets mélangeurs (10) pour le secteur avant.

3. Système de climatisation selon la revendication 1 ou 2,
**caractérisé en ce que** le système de climatisation présente, dans son plan médian, une paroi de séparation, et le carter (2) et les volets (7 ; 10 ; 12 ; 13 ; 16 ; 17 ; 18 ; 17') disposés dans le carter (2) sont configurés en étant symétriques par rapport au plan médian.

4. Système de climatisation selon l'une quelconque des revendications précédentes, **caractérisé en ce que** le radiateur (5) est incliné par rapport à l'évaporateur (4), suivant un angle de 20° maximum, en particulier de 10° maximum.

5. Système de climatisation selon l'une quelconque des revendications précédentes, **caractérisé en ce que** le bord le plus haut du radiateur (5) est disposé en étant à peu près à la même hauteur que le bord le plus haut de l'évaporateur (4).

6. Système de climatisation selon l'une quelconque des revendications précédentes, **caractérisé en ce que** l'axe de pivotement du volet mélangeur (7) placé à l'arrière est disposé en étant adjacent à l'évaporateur (4).

7. Système de climatisation selon l'une quelconque des revendications précédentes, **caractérisé en ce que** l'axe de pivotement du volet mélangeur (7) placé à l'arrière est disposé entre le quart le plus bas et le deuxième quart le plus bas de l'évaporateur (4).

8. Système de climatisation selon l'une quelconque des revendications précédentes, **caractérisé en ce que** l'axe de pivotement du volet mélangeur (10) placé à l'avant est disposé en étant adjacent à un bord du radiateur (5).

9. Système de climatisation selon la revendication 8,
**caractérisé en ce que** l'axe de pivotement du volet mélangeur (10) placé à l'avant est disposé en étant adjacent au bord le plus haut du radiateur (5).

10. Système de climatisation selon l'une quelconque des revendications précédentes, **caractérisé en ce qu'**un volet (11) est disposé dans le secteur central, derrière le radiateur (5) ou derrière un radiateur auxiliaire (6) disposé derrière le radiateur (5), volet au moyen duquel une ouverture est réglable entre le secteur avant et le secteur arrière.
